# EUROPÄISCHE PATENTSCHRIFT

(11) **EP 2 810 829 B1**
(45) Veröffentlichungstag und Bekanntmachung des Hinweises auf die Patenterteilung: **27.04.2016**
(21) Anmeldenummer: 14169099.0
(22) Anmeldetag: 20.05.2014
(51) Int. Cl.: F16L 3/08, F16L 3/13, H02G 3/32, H01R 9/24, H01R 13/58, B60R 16/02

(54) **Befestigungsclip**
Retaining clip
Clip de fixation

(30) Priorität: 06.06.2013 FR 1355195
(43) Veröffentlichungstag der Anmeldung: 10.12.2014
(73) Patentinhaber: TRW Automotive Electronics & Components GmbH, 78315 Radolfzell (DE)
(72) Erfinder: Kuhm, Michel, 67340 Ingwiller (FR); Ouine, Emmanuel, 67240 Bischwiller (FR)
(74) Vertreter: Prinz & Partner mbB

(56) Entgegenhaltungen:
- EP-A2- 1 101 988
- FR-A1- 2 491 165
- FR-A1- 2 765 280
- US-A1- 2012 004 659
- US-B1- 6 216 987

## Beschreibung

Die Erfindung betrifft einen Befestigungsclip gemäß dem Oberbegriff des Anspruchs 1.

In Fahrzeugen werden Befestigungsclips z.B. eingesetzt, um Kabel der Fahrzeugelektrik relativ zueinander zu positionieren und zu fixieren oder um Kabel an der Fahrzeugkarosserie zu arretieren. In vielen Fällen verlaufen die Kabel in einem Winkel zueinander, sodass Befestigungsclips entwickelt wurden, die zwei Kabelhalterungen aufweisen, die gegeneinander verdrehbar sind. Die Drehbarkeit wird beispielsweise dadurch erreicht, dass zwei separate Kabelhalterungen drehbar miteinander verbunden werden. Die separate Herstellung und anschließende Montage der beiden Kabelhalter erhöht den Fertigungsaufwand und verteuert somit das Bauteil.

Aus der EP 1101 988 A2 ist ein Befestigungsclip bekannt, bei dem zwei Abschnitte, die jeweils eine Aufnahme aufweisen, über einen flexiblen Steg mit rechteckigem Querschnitt miteinander verbunden sind. Um ein Verbiegen des Stegs zu begrenzen, sind zwei Stützteller an den Abschnitten vorgesehen, die als Anschlägen dienen. Der Oberbegriff des Anspruchs 1 ist aus diesem Dokument bekannt.

Aufgabe der Erfindung ist es, einen flexibel einsetzbaren Befestigungsclip zu schaffen, der einfach und kostengünstig zu fertigen ist.

Erfindungsgemäß wird dies mit einem Befestigungsclip mit den Merkmalen des Anspruchs 1 erreicht. Da der Halteabschnitt flexibel mit dem Grundkörper verbunden ist, ist zum einen ein Bewegungsspielraum zwischen dem Grundkörper und dem Halteabschnitt gegeben, sodass der Befestigungsclip an unterschiedlichste Einbausituationen angepasst werden kann. Zum Anderen kann der Befestigungsclip einstückig und vorzugsweise werkzeugfallend hergestellt werden, was die Zahl der Verarbeitungsschritte reduziert und somit die Fertigung kostengünstiger macht. Die Flexibilität lässt sich, wenn dies gewünscht ist, in allen drei Raumrichtungen realisieren.

Die ersten Anschläge sind vorzugsweise Teile einer am Grundkörper und/oder am Halteabschnitt vorgesehenen Anschlagsstruktur, die eine Bewegung des Halteabschnitts relativ zum Grundkörper begrenzt. Die Anschläge begrenzen dabei vorzugsweise auch eine Bewegung der flexiblen Elemente, sodass auf einfache Weise verhindert wird, dass die flexiblen Elemente eine übermäßig hohe Auslenkung oder Rotation erfahren oder eine übermäßig hohe Kraft auf diese wirkt.

Diese Anschläge, aber auch die gesamte Anschlagstruktur, können im Bereich der flexiblen Elemente angeordnet sein.

Der Befestigungsclip dient vorzugsweise zur Befestigung von Kabeln, die in die Aufnahmen eingebracht werden können, er kann aber natürlich auch z.B. für Leitungen oder Rohre verwendet werden. Der Befestigungsclip kann so ausgelegt sein, dass er mit der Karosserie verbunden werden kann, er kann aber auch so gestaltet sein, dass er sich freitragend verbauen lässt.

Der Halteabschnitt ist vorzugsweise gegenüber dem Grundkörper um einen vorbestimmten Winkel verdrehbar, um unterschiedlichen Orientierungen der zu befestigenden Bauteile Rechnung tragen zu können.

Die flexiblen Elemente können auch gleichzeitig bei ihrer Auslenkung eine Rückstellkraft in die neutrale Position erzeugen.

Die einstückige, flexible Verbindung von Halteabschnitt und Grundkörper wird dadurch erreicht, dass der Halteabschnitt mit dem Grundkörper über zwei flexible Elemente verbunden ist, die mit dem Grundkörper und mit dem Halteabschnitt einstückig verbunden sind. Dabei bilden vorzugsweise die flexiblen Elemente die einzige Verbindung zwischen dem Grundkörper und dem Halteabschnitt.

Als flexible Elemente kommen beispielsweise zwei flexible Stege infrage, die sich zwischen dem Grundkörper und dem Halteabschnitt erstrecken.

Der Halteabschnitt weist eine Drehachse auf, die z.B. etwa senkrecht zur Längserstreckung des Grundkörpers verläuft. Die flexiblen Elemente stehen senkrecht von einem mit der Drehachse des Halteabschnitts zusammenfallenden Vorsprung ab und sind vorteilhaft an den Innenrand einer Öffnung im Grundkörper angeformt, in die sich der Vorsprung hinein erstreckt.

Die Stege der flexiblen Elemente können eine größere Ausdehnung senkrecht zur Verbindungsebene zwischen Grundkörper und Halteabschnitt haben, als die Breite des Stegs in dieser Ebene beträgt, um eine Stabilisierung des Halteabschnitts gegenüber dem Grundkörper zu bewirken. Außerdem lässt sich so auf einfache Weise eine ausreichend große Rückstellkraft in den flexiblen Elementen erzielen.

An der Drehachse ist in einer Variante ein stabiler Vorsprung vorgesehen, der in Kontakt mit den ersten Anschlägen kommt, die vorzugsweise am Innenrand der Öffnung im Grundkörper ausgebildet, insbesondere angeformt, sind. Über die Anordnung der ersten Anschläge lässt sich der maximale Drehwinkel auf einfache Weise vorgeben. Dieser kann beispielsweise ± 30° um eine Neutralstellung betragen. Andere Winkel, die auch asymmetrisch um die Neutralstellung vorgegeben werden können, sind natürlich auch realisierbar.

Vorzugsweise sind zweite Anschläge vorgesehen, die eine Verschiebung des Halteabschnitts relativ zum Grundkörper begrenzen. Auf diese Weise lässt sich auf einfache Weise eine Begrenzung der Bewegung des Grundkörpers relativ zum Halteabschnitt in allen Raumrichtungen erreichen.

Die zweiten Anschläge bestehen beispielsweise aus zwei Vorsprüngen am Grundkörper, zwischen denen in Axialrichtung der Drehachse des Halteabschnitts ein am Halteabschnitt ausgebildeter Vorsprung liegt, wobei in Draufsicht die Vorsprünge überlappen. Die Anordnung der zweiten Anschläge an der Drehachse und am Grundkörper kann natürlich auch umgekehrt gewählt werden. Die axiale Verschiebung ist durch den axialen Abstand der Vorsprünge begrenzt, während die Verschiebung in Radialrichtung durch den radialen Abstand der Vorsprünge von der Drehachse begrenzt wird. Der Drehwinkel wird vorzugsweise wie oben beschrieben durch die ersten Anschläge limitiert.

In einer bevorzugten Ausführungsform sind am Befestigungsclip insgesamt drei Aufnahmen vorgesehen, wobei insbesondere zwei Aufnahmen am Grundkörper ausgebildet sind.

Die Aufnahmen am Grundkörper können sich in verschiedene Richtungen öffnen, wobei insbesondere ein Versatz um 90° realisierbar ist, aber auch jeder andere Winkel zwischen den Aufnahmen, beispielsweise 180°.

Wenigstens eine der Aufnahmen am Grundkörper weist vorzugsweise eine Längenausgleichsstruktur auf, insbesondere mit einem Federelement, das in die Aufnahme hineinragt. Eine derartige Struktur gibt dem Befestigungsclip einen weiteren Freiheitsgrad, nämlich bezüglich des Abstands der zu verbindenden langgestreckten Bauteile, der über die Länge der Längenausgleichsstruktur variieren kann.

Die Erfindung wird nachfolgend anhand mehrerer Ausführungsbeispiele mit Bezug auf die beigefügten Zeichnungen näher beschrieben. In den Zeichnungen zeigen:
- Figur 1 eine schematische perspektivische Darstellung eines erfindungsgemäßen Befestigungsclips gemäß einer ersten Ausführungsform;
- Figuren 2 und 3 schematische Ansichten der Verbindung des Grundkörpers mit dem Halteabschnitt des Befestigungsclips aus Figur 1;
- Figur 4 eine schematische Seitenansicht des Befestigungsclips aus Figur 1;
- Figur 5 eine schematische Seitenansicht eines erfindungsgemäßen Befestigungsclips gemäß einer zweiten Ausführungsform; und
- Figuren 6 und 7 Montageschritte des Befestigungsclips aus Figur 5 an zwei langgestreckten Bauteilen.

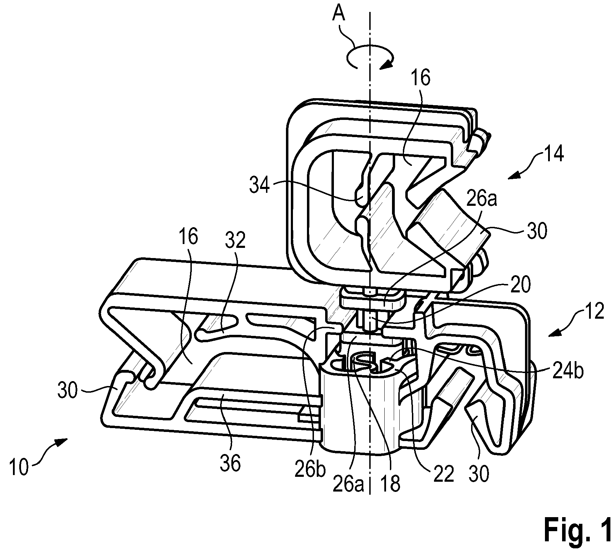

Figur 1 zeigt einen Befestigungsclip 10 gemäß einer ersten Ausführungsform. Der Befestigungsclip 10 weist einen Grundkörper 12 und einen Halteabschnitt 14 auf.

In diesem Beispiel ist am Halteabschnitt 14 eine einzige Aufnahme 16 für ein langgestrecktes Bauteil, insbesondere ein Kabel, vorgesehen. Der Grundkörper 12 weist hier zwei Aufnahmen 16 auf, die ebenfalls für langgestreckte Bauteile, insbesondere Kabel, ausgelegt sind.

Der Halteabschnitt 14 hat eine stoffschlüssige Verbindung mit dem Grundkörper 12 sodass diese beiden Bauteile eine einstückige, zusammenhängende Einheit bilden.

Die Verbindung ist jedoch so flexibel, dass der Halteabschnitt 14 gegenüber dem Grundkörper 12 in einem vordefinierten Spielraum reversibel bewegbar ist.

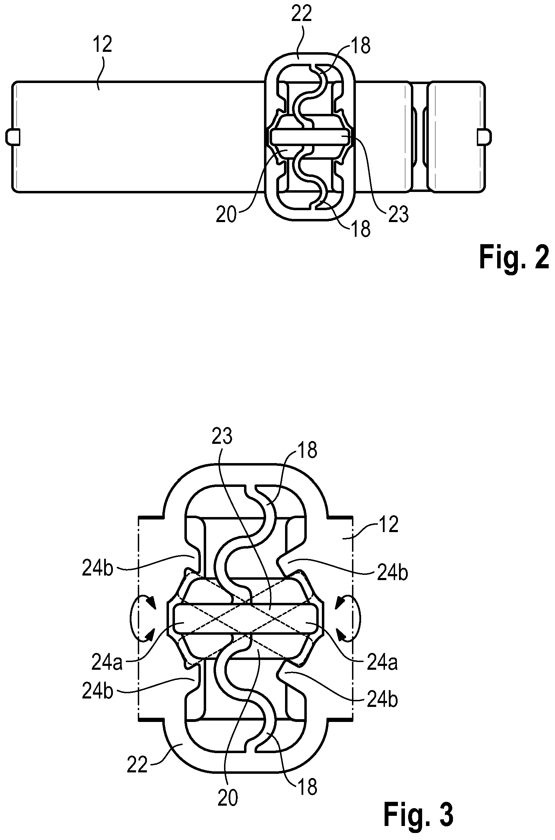

Der Halteabschnitt 14 ist gegenüber dem Grundkörper 12 um ein vorbestimmtes Maß um eine Drehachse A drehbar angeordnet. Hierzu sind zwei flexible Elemente 18 vorgesehen (siehe Figuren 2 und 3), die hier in Form von S-förmig geschwungenen, in Figur 2 in die Bildebene hineinragenden Kunststoffstegen ausgebildet sind. An einem ihrer Enden sind die flexiblen Elemente 18 jeweils einstückig mit einem am Halteabschnitt 14 angeformten Vorsprung 20 verbunden, der sich entlang der Drehachse A erstreckt. Das jeweils andere Ende jedes der flexiblen Elemente 18 ist einstückig mit einem am Grundkörper 12 angeformten Rahmen 22 verbunden, sodass die beiden flexiblen Elemente 18 und der zwischen ihnen angeordnete Vorsprung 20 in der durch den Rahmen 22 gebildeten Öffnung im Grundkörper 12 liegen. Der Vorsprung 20 erstreckt sich mittig durch die vom Rahmen 22 gebildete Öffnung.

Die beiden flexiblen Elemente 18 sind einstückig sowohl mit dem Rahmen 22 als auch mit dem Vorsprung 20 verbunden. Diese Einheit wird in diesem Beispiel in einem Spritzgussverfahren hergestellt.

Die die flexiblen Elemente 18 bildenden Stege sind so elastisch, dass sie eine Verdrehung des Vorsprungs 20 gegenüber dem Rahmen 22 und damit eine Verdrehung des Halteabschnitts 14 gegenüber dem Grundkörper 12 zulassen. Bei der Verdrehung entsteht in den flexiblen Elementen 18 eine Rückstellkraft, die bestrebt ist, den Halteabschnitt 14 wieder in die in den Figuren 2 und 3 dargestellte neutrale Ausgangsposition zurückzustellen.

In diesem Fall sind die flexiblen Elemente 18 in die Bildebene hinein länger ausgebildet als ihre Breite in der Bildebene, sodass über die flexiblen Elemente 18 eine stabile Verbindung zwischen Grundkörper 12 und Halteabschnitt 14 erreicht wird, wobei die flexiblen Elemente 18 den Halteabschnitt 14 gegenüber dem Grundkörper 12 auch gegen Kippbewegungen senkrecht zur Drehachse A stabilisieren.

Am Vorsprung 20 ist ein Steg 23 ausgebildet, der sich senkrecht zur Drehachse A erstreckt. In diesem Beispiel liegt der Steg 23 am in den Figuren oberen Ende der flexiblen Elemente 18. Die beiden freien Enden des Stegs 23 bilden zwei gegenüberliegende erste Anschläge 24a. Diese wirken mit insgesamt vier ersten Anschlägen 24b zusammen, die von der Innenseite des Rahmens 22 in die Öffnung im Grundkörper 12 ragen (siehe Figur 3). Die ersten Anschläge 24a, 24b begrenzen den maximalen Drehwinkel des Halteabschnitts 14 gegenüber dem Grundkörper 12 um die Drehachse A, da die Anschläge 24a am Steg 23 in Anlage an die Anschläge 24b am Rahmen 22 gelangen. Über die Lage der Anschläge 24a, 24b kann der maximale Drehwinkel gemäß dem Ermessen des Fachmanns eingestellt werden. In diesem Fall beträgt der maximale Drehwinkel etwa ± 30° gegenüber der in Figur 3 dargestellten Neutralstellung (angedeutet durch die maximalen ausgelenkten Positionen des Stegs 23 in gestrichelten Linien).

Die ersten Anschläge 24a, 24b sind Teil einer Anschlagstruktur, zu der auch zweite Anschläge 26a, 26b gehören, die eine Verschiebung des Halteabschnitts 14 relativ zum Grundkörper 12 begrenzen. Zwei zweite Anschläge 26a in Form von radial vom Vorsprung 20 abstehenden, axial übereinanderliegenden Vorsprüngen sind in diesem Beispiel am Vorsprung 20 zwischen den flexiblen Elementen 18 und der Aufnahme 16 des Halteabschnitts 14 angeformt (siehe Fign. 1, 4 und 5).

Am Grundkörper 12 sind axial oberhalb des Rahmens 22 in diesem Beispiel zwei plattenförmig radial nach innen zur Drehachse A ragende Vorsprünge angeformt, die die korrespondierende zweiten Anschläge 26b bilden. Aufgrund des Ineinandergreifens sämtlicher zweiten Anschläge 26a, 26b kommen die Anschläge 26b am Grundkörper 12 bei einer Bewegung des Halteabschnitts 14 in Axialrichtung A oder in Radialrichtung in Kontakt mit den Anschlägen 26a am Vorsprung 20. Die zweiten Anschläge 26b am Grundkörper 12 könnten auch so ausgebildet sein, dass sie den Vorsprung 20 umfangsmäßig vollständig umgeben.

Die zweiten Anschläge 26a, 26b sind in Radialrichtung ineinandergreifend angeordnet. Es ist also nicht möglich, den Halteabschnitt 14 in den Figuren nach oben vom Grundkörper 12 um mehr als die Distanz zwischen den zweiten Anschlägen 26a, 26b abzuheben.

Der gesamte Befestigungsclip 10, inklusive der flexiblen Elemente 18, des Vorsprungs 20, der Aufnahmen 16 und der Anschläge 24a, 24b, 26a, 26b, wird in diesem Beispiel in einem einzigen Spritzgussverfahren hergestellt, eventuell in mehreren aufeinanderfolgenden Gussschritten, sodass der Befestigungsclip 10 werkzeugfallend gefertigt wird.

Über die flexiblen Element 18 und über die zweiten Anschläge 26a, 26b ist der Halteabschnitt 14 auch unverlierbar mit dem Grundkörper 12 verbunden.

Der Halteabschnitt 14 und der Grundkörper 12 sind hier nur über die flexiblen Elemente 18, die mit dem Rahmen 22 und dem Vorsprung 20 verbunden sind, aneinander befestigt. Die Verbindung geschieht bereits im Werkzeug, nach Entnahme aus dem Werkzeug sind keine weiteren Montageschritte vorgesehen.

Sämtliche Komponenten des Befestigungsclips 10 bestehen hier aus demselben Kunststoffmaterial. Es wäre aber auch möglich, beispielsweise für die flexiblen Elemente 18, ein anderes, beispielsweise elastischeres Material, zu verwenden.

Im gezeigten Beispiel sind die Öffnungen aller drei Aufnahmen 16 des Befestigungsclips 10 unterschiedlich orientiert. Die Aufnahme 16 des Halteabschnitts 14 ist seitlich ausgerichtet. Eine der Aufnahmen 16 des Grundkörpers 12 ist senkrecht nach unten geöffnet, während die zweite Aufnahme 16 des Grundkörpers 12 in der Neutralstellung um 180° gegenüber der Öffnung der Aufnahme im Halteabschnitt 14 ausgerichtet ist.

Jeder der Aufnahmen 16 weist nach innen gerichtete Rastarme 30 auf, die ein einfaches Aufschieben des Befestigungsclips 10 auf das langgestreckte Bauteil 28 erlauben, aber gleichzeitig verhindern, dass sich der Befestigungsclip 10 ohne äußere Einwirkung wieder vom langgestreckten Bauteil 28 löst.

In einer der Aufnahmen 16 des Grundkörpers 12 ist zusätzlich zu den Rastarmen 30 eine Längenausgleichsstruktur 32 vorgesehen, mit einem Federelement in Form eines Armes, der schräg ins Innere der Aufnahme 16 hineinragt und der das langgestreckte Bauteil 28 zu den Rastarmen 30 hin beaufschlagt. Bei Einwirkung einer Kraft in Richtung der Drehachse A in das Innere der Aufnahme 16 hinein kann sich das langgestreckte Bauteil 28 um ein gewisses Maß gegen den Widerstand der Längenausgleichsstruktur 32 in die Aufnahme 16 hinein bewegen. Auf diese Weise kann der Befestigungsclip 10 für unterschiedlich beabstandete langgestreckte Bauteile 28 eingesetzt werden.

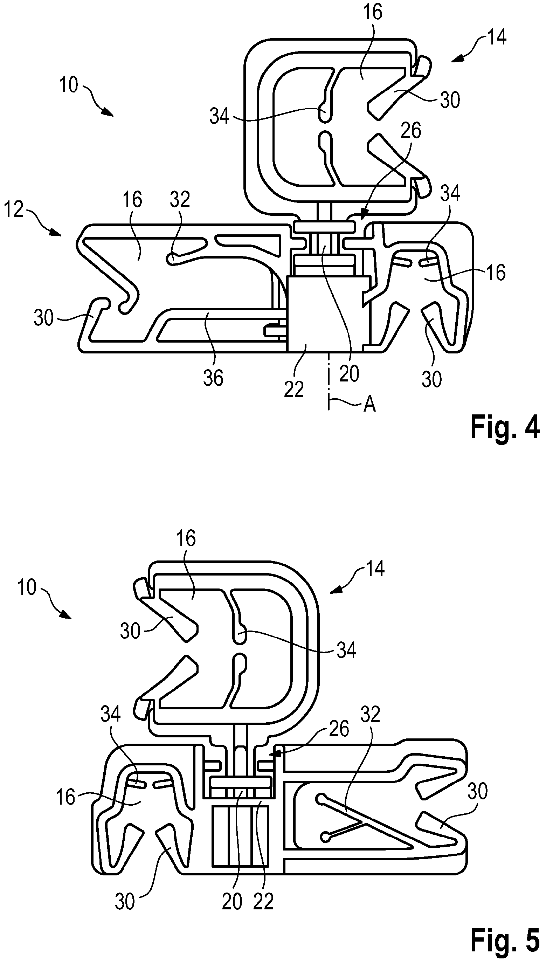

Bei der in den Figuren 1 und 4 dargestellten ersten Ausführungsform ist der Arm der Längenausgleichsstruktur 32 in der langgestreckten Aufnahme 16 (in diesen Figuren auf der linken Seite abgebildet) kurz ausgebildet und ragt von oben in die Aufnahme 16 hinein, während außerdem eine Führungsrampe 36 gegenüberliegend des Arms vorgesehen ist.

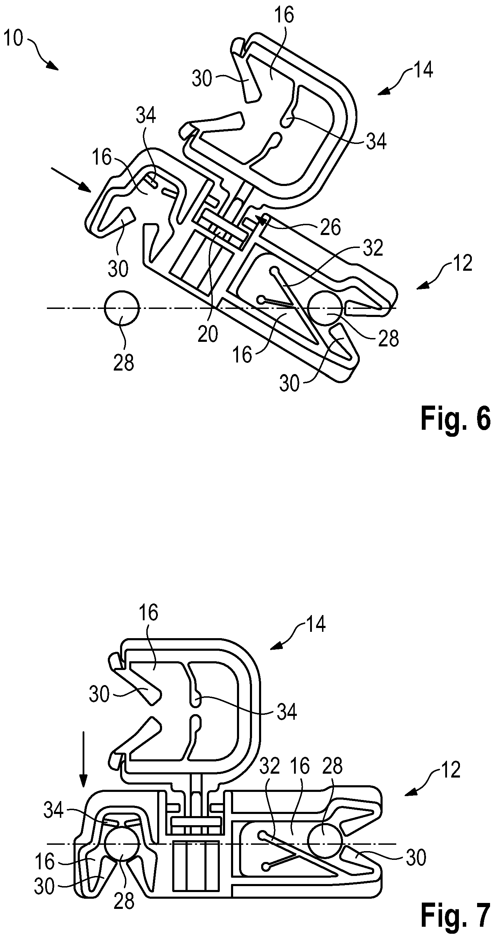

In der in den Figuren 6 und 7 gezeigten zweiten Ausführungsform ist die Längenausgleichsstruktur 32 in der in den Figuren rechten Aufnahme 16 vorgesehen. In dieser Variante ist die Längenausgleichsstruktur 32 ragt ein langer, Y-förmig ausgebildeter Arm schräg ins Innere der Aufnahme 16 hinein.

In diesem Beispiel ist nur diese eine der drei Aufnahmen 16 mit einer derartigen Längenausgleichsstruktur 32 ausgerüstet. Es wäre aber auch möglich, diese Art der Aufnahme 16 an mehreren Stellen des Befestigungsclips 10 zu verwenden.

In den anderen beiden Aufnahmen 16 ist jeweils ein Federelement 34 angeordnet, das das langgestreckte Bauteil 28 in Richtung zu den Rastarmen 30 beaufschlagt und so den Befestigungsclip 10 fest und ohne Klappern auf den langgestreckten Bauteilen 28 hält.

Die Montage an beispielsweise zwei parallelen Kabeln, die langgestreckte Bauteile 28 bilden, ist in den Figuren 6 und 7 dargestellt. Zunächst wird die seitlich geöffnete Aufnahme 16 des Grundkörpers 12 (in Figur 6 auf der rechten Seite) über das langgestreckte Bauteil 28 geschoben, bis dieses hinter den nach innen gerichteten Rastarmen 30 der Aufnahme 16 einrastet.

Nach dem Aufstecken auf das rechte der langgestreckten Bauteile 28 in Figur 6 (siehe Pfeil) wird der Befestigungsclip 10 mit der zweiten Aufnahme 16 des Grundkörpers 12 von oben auf das zweite langgestreckte Bauteil 28 aufgedrückt, sodass es zwischen die Rastarme 30 gleitet und in der Aufnahme 16 einrastet (siehe Figur 7).

Es ist natürlich denkbar, am Grundkörper 12 nur eine oder auch mehr als zwei Aufnahmen 16 vorzusehen, genauso wie am Halteabschnitt 14 mehr als nur eine Aufnahme 16 ausgebildet sein kann. Anstelle oder zusätzlich zu wenigstens einer der Aufnahmen 16 könnte am Befestigungsclip 10 auch ein Befestigungsmittel, beispielsweise ein Rastelement, zur Verbindung mit beispielsweise der Fahrzeugkarosserie vorgesehen sein.

## Patentansprüche

1. Befestigungsclip mit einem Grundkörper (12) und wenigstens einem einstückig, aber flexibel mit dem Grundkörper (12) verbundenen Halteabschnitt (14), wobei sowohl der Grundkörper (12) als auch der Halteabschnitt (14) wenigstens eine Aufnahme (16) für ein langgestrecktes Bauteil (28) aufweisen und der Halteabschnitt (14) gegenüber dem Grundkörper (12) in einem vordefinierten Spielraum reversibel bewegbar ist, wobei erste Anschläge (24a, 24b) vorgesehen sind, die eine Rotation des Halteabschnitts (14) relativ zum Grundkörper (12) begrenzen, **dadurch gekennzeichnet, dass** der Halteabschnitt (14) mit dem Grundkörper (12) über zwei flexible Elemente (18) verbunden ist, die mit dem Grundkörper (12) und mit dem Halteabschnitt (14) einstückig verbunden sind, wobei die flexiblen Elemente (18) senkrecht von einem mit einer Drehachse (A) des Halteabschnitts (14) zusammenfallenden Vorsprung (20) abstehen.

2. Befestigungsclip nach Anspruch 1, **dadurch gekennzeichnet, dass** der Halteabschnitt (14) gegenüber dem Grundkörper (12) um einen vorbestimmten Winkel verdrehbar ist.

3. Befestigungsclip nach einem der vorhergehenden Ansprüche, **dadurch gekennzeichnet, dass** als flexible Elemente (18) zwei flexible Stege vorgesehen sind, die sich zwischen dem Grundkörper (12) und dem Halteabschnitt (14) erstrecken.

4. Befestigungsclip nach einem der vorhergehenden Ansprüche, **dadurch gekennzeichnet, dass** zweite Anschläge (26a, 26b) vorgesehen sind, die eine Verschiebung des Halteabschnitts (14) relativ zum Grundkörper (12) begrenzen.

5. Befestigungsclip nach einem der vorhergehenden Ansprüche, **dadurch gekennzeichnet, dass** insgesamt drei Aufnahmen (16) vorgesehen sind, insbesondere zwei Aufnahmen (16) am Grundkörper (12).

6. Befestigungsclip nach einem der vorhergehenden Ansprüche, **dadurch gekennzeichnet, dass** sich die Aufnahmen (16) am Grundkörper (12) in verschiedene Richtungen öffnen.

7. Befestigungsclip nach einem der vorhergehenden Ansprüche, **dadurch gekennzeichnet, dass** wenigstens eine der Aufnahmen (16) am Grundkörper (12) eine Längenausgleichsstruktur (32) aufweist, insbesondere mit einen Federelement, das in die Aufnahme (16) hineinragt.

## Claims

1. A fastening clip comprising a base body (12) and at least one holding portion (14) which is integrally but flexibly connected to the base body (12), both the base body (12) and the holding portion (14) including at least one receptacle (16) for an elongated member (28) and the holding portion (14) being reversibly movable with respect to the base body (12) in a predefined range, first stops (24a, 24b) being provided which limit a rotation of the holding portion (14) relative to the base body (12), **characterized in that** the holding portion (14) is connected to the base body (12) through two flexible elements (18) which are integrally connected to the base body (12) and to the holding portion (14), the flexible elements (18) projecting perpendicularly from a protrusion (20) coinciding with an axis of rotation (A) of the holding portion (14).

2. The fastening clip according to claim 1, **characterized in that** the holding portion (14) can be rotated with respect to the base body (12) by a predetermined angle.

3. The fastening clip according to either of the preceding claims, **characterized in that** two flexible webs are provided as flexible elements (18), which extend between the base body (12) and the holding portion (14).

4. The fastening clip according to any of the preceding claims, **characterized in that** second stops (26a, 26b) are provided which limit a displacement of the holding portion (14) relative to the base body (12).

5. The fastening clip according to any of the preceding claims, **characterized in that** a total of three receptacles (16) are provided, in particular two receptacles (16) on the base body (12).

6. The fastening clip according to any of the preceding claims, **characterized in that** the receptacles (16) on the base body (12) open in different directions.

7. The fastening clip according to any of the preceding claims, **characterized in that** at least one of the receptacles (16) on the base body (12) includes a length compensation structure (32), in particular having a spring element which protrudes into the receptacle (16).

## Revendications

1. Clip de fixation, présentant un corps de base (12) et au moins un tronçon de retenue (14) relié d'un seul tenant mais de manière flexible au corps de base (12), tant le corps de base (12) que le tronçon de retenue (14) présentant au moins un logement (16) pour un composant allongé (28), et le tronçon de retenue (14) étant mobile de manière réversible par rapport au corps de base (12) sur une marge prédéfinie, des première butées (24a, 24b) étant prévues, lesquelles limitent une rotation du tronçon de retenue (14) par rapport au corps de base (12), **caractérisé en ce que** le tronçon de retenue (14) est relié au corps de base (12) par deux éléments flexibles (18) qui sont reliés d'un seul tenant au corps de base (12) et au tronçon de retenue (14), les éléments flexibles (18) faisant perpendiculairement saillie d'un ressaut (20) coïncidant avec un axe de rotation (A) du tronçon de retenue (14).

2. Clip de fixation selon la revendication 1, **caractérisé en ce que** le tronçon de retenue (14) est apte à être tourné sur un angle prédéterminé par rapport au corps de base (12).

3. Clip de fixation selon l'une des revendications précédentes, **caractérisé en ce que** deux barrettes flexibles qui s'étendent entre le corps de base (12) et le tronçon de retenue (14) sont prévues en tant qu'éléments flexibles (18).

4. Clip de fixation selon l'une des revendications précédentes, **caractérisé en ce qu'**il est prévu des deuxièmes butées (26a, 26b) qui limitent un déplacement du tronçon de retenue (14) par rapport au corps de base (12).

5. Clip de fixation selon l'une des revendications précédentes, **caractérisé en ce qu'**il est prévu au total trois logements (16), en particulier deux logements (16) sur le corps de base (12).

6. Clip de fixation selon l'une des revendications précédentes, **caractérisé en ce que** les logements (16) sur le corps de base (12) s'ouvrent dans différentes directions.

7. Clip de fixation selon l'une des revendications précédentes, **caractérisé en ce qu'**au moins l'un des logements (16) sur le corps de base (12) comporte une structure de compensation de longueur (32) qui présente en particulier un élément ressort faisant saillie dans le logement (16).
